Europäisches Patentamt

European Patent Office

Office européen des brevets

(19)

(11) Veröffentlichungsnummer: **0 274 760 B1**

## (12) EUROPÄISCHE PATENTSCHRIFT

(45) Veröffentlichungstag der Patentschrift: **27.02.91**

(21) Anmeldenummer: **87119421.3**

(22) Anmeldetag: **31.12.87**

(51) Int. Cl.⁵: **F16B 2/14, F16L 3/12**

(54) Anlage mit einer freiliegend aufgehängten Rohrleitung.

(30) Priorität: **15.01.87 CH 124/87**

(43) Veröffentlichungstag der Anmeldung:
**20.07.88 Patentblatt 88/29**

(45) Bekanntmachung des Hinweises auf die
Patenterteilung:
**27.02.91 Patentblatt 91/09**

(84) Benannte Vertragsstaaten:
**AT BE CH DE IT LI NL**

(56) Entgegenhaltungen:
**EP-A- 0 160 890        EP-A- 0 165 370
DE-U- 7 126 824        FR-A- 2 220 648
FR-A- 2 409 411        FR-A- 2 549 543
US-A- 2 889 145        US-A- 3 506 227
US-A- 4 167 355**

(73) Patentinhaber: **Geberit AG Armaturen & Apparatefabrik
Schachenstrasse 77
CH-8640 Rapperswil(CH)**

(72) Erfinder: **Gmür, Albin
Rietstrasse
CH-8723 Rufi(CH)**

(74) Vertreter: **Troesch, Jacques J., Dr. sc. nat. et
al
Troesch Scheidegger Werner AG Siewerdtstrasse 95
CH-8050 Zürich(CH)**

**Beschreibung**

Die vorliegende Erfindung betrifft eine Anlage mit mindestens einer zur Medienführung vorgesehenen freiliegenden Rohrleitung, welche mittels Haltern an Bauteilen lösbar befestigt ist sowie Halter zum Halten von Rohrleitungen und Tragelementen in solchen Anlagen.

Bei aus Kunststoff bestehenden Abwasserleitungen, welche an Gebäudeteilen aufgehängt oder abgestützt werden, besteht die Schwierigkeit, dass diese Leitungen entweder geringe Stützweiten haben und daher eine grosse Anzahl von Aufhänge- oder Abstützelementen für eine vorgegebene Leitungslänge benötigt wird, oder dass bei weiten Stützlängen sich die Abwasserleitung durchbiegt, sei dies bedingt durch das eigene Gewicht, sei dies durch Wärmedehnungen, welch letztere sich nicht nur in Vertikalebenen auswirken.

Die bisherigen Aufhängungen sind als sog. Fixpunkt-Aufhänger konzipiert, was bei wesentlichen Temperaturunterschieden der Leitungen zu unerwünschten Wärmespannungen und gegebenenfalls Formänderungen führen könnte.

So zeigt beispielsweise die US-A-2 889 145 eine Vorrichtung zur Aufnahme freiliegender Heissluftleitungen u. dgl., wobei die Stützelemente einer derartigen Anlage verstellbar sind, um den Rohraussendimensionen angepasst zu werden. Hierbei dient die aufzuhängende oder zu stützende Heissluftleitung nicht nur der Medienführung, sondern sie muss zusammen mit dem Abstand der einzelnen Stützelemente so dimensioniert sein, dass sie auch die auftretenden Kräfte, insbesondere ihr Eigengewicht, ohne massgebliche Deformation ertragen kann. Diese Doppelfunktion, nämlich das Führen des Mediums in der Rohrleitung und die festigkeitsgerechte Dimensionierung zwingen zu unerwünschten Kompromissen und verhindern oftmals die Verwendung des für das mediumführende Rohr optimalen Materials.

Die Befestigungsfrage derartiger medienführender Leitungen und ihrer Stütz- und Aufhängeelemente ist auf viele spezielle Arten beantwortet worden, wie dies beispielsweise die FR-A 2 220 648, FR-A 2 409 411 und FR-A 2 549 543 sowie die US-A 4 167 355, US-A 3 506 227 und das DE-U-7 126 824 zeigen.

Alle diese bekannten Aufhängevorrichtungen mit Befestigungselementen dienen zur Festhaltung freiliegender Rohrleitungen oder zeigen Verbindungselemente für aus Rohren zusammengesetzte Traggerüste für Bauten. Bei letzteren findet eine kreuzweise Anordnung der Rohre statt. Dazu sind entsprechende Verbindungselemente vorgesehen.

In der EP-A- 0 160 890 ist zwar ein auf einem Stützgerüst befestigter Abgaskanal offenbart, welcher auf einer Tragkonstruktion mit Längsstreben über seine Längsflansche abgestützt ist. Diese Konstruktion eignet sich nur zum Verlegen von Rohrleitungen auf Bo denstützgerüsten und nicht zum Aufhängen an Decken oder Seitenwänden, da diese Stützen dafür, im Hinblick auf zu stützende Abgaskanäle, im Aufbau zu kompliziert und gewichtsmässig viel zu schwer sind.

Zum Stande der Technik gehört ferner die EP-A- 0 165 370, welche eine Aufhängevorrichtung für Rohre zeigt. Die das Rohr tragenden Rohrhalter sind in sich äusserst stabil und leicht höhenverstellbar ausgebildet.

Sie sind jedoch zur Aufnahme nur eines Rohres vorgesehen, so dass, entsprechend der Biegesteifigkeit des Rohres, der Abstand der sich folgenden Rohrhalter relativ klein wird und damit insbesondere bei aus Kunststoff bestehenden Abwasserleitungen die vorbeschriebenen geringen Stützweiten in Kauf genommen werden müssen.

Die Verwendung derartiger Rohrhalter kann daher die im folgenden erläuterte Aufgabe nicht lösen, denn das aufzuhängende Rohr ist durch keinen zusätzlichen Träger verstärkt und der Abstand der Rohrhalter ist einzig und allein aufgrund der Biegefestigkeit des aufgehängten Rohres festgelegt.

Die vorliegende Erfindung bezweckt die Schaffung der Möglichkeit, solche Abwasserleitungen mit relativ grossen Stützlängen montieren zu können, ohne dabei eine, den Wasserabfluss hemmende oder sonstwie merkliche Deformation der Abwasserleitung in Kauf nehmen zu müssen.

Die Lösung dieses Problems ermöglicht eine Verbindungsvorrichtung, welche durch einen der Ansprüche gekennzeichnet ist.

Die Erfindung wird anschliessend beispielsweise anhand einer Figur erläutert.

Es zeigen:

Fig. 1    eine an einer Decke montierte Abwasserleitung,

Fig. 2    eine an einer Decke befestigbare Rohrschelle, deren unterer Teil als Verbindungsvorrichtung ausgebildet und mit einem Träger mittels Keil lösbar verbunden ist,

Fig. 3    eine Verbindungsvorrichtung zum Verbinden zweier koaxial liegender Trägerrohre,

Fig. 4    einen Querschnitt durch die Vorrichtung nach Fig. 3,

Fig. 5    einen Keil in verschiedenen Darstellungen.

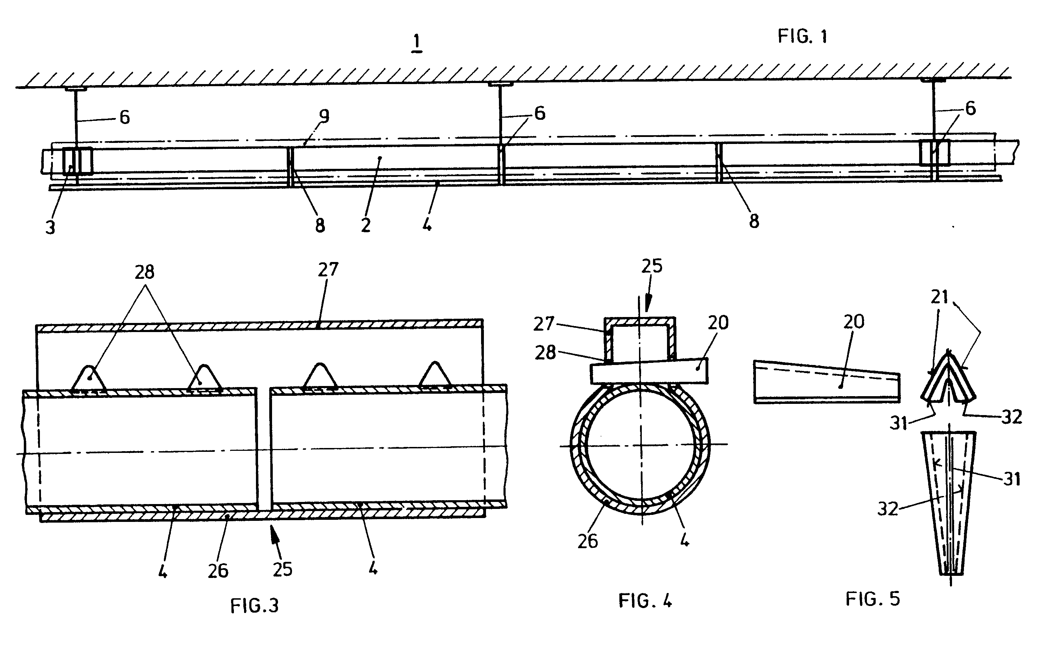

In Fig. 1 ist ein Teil einer Decke 1 dargestellt, an der eine Abwasserleitung 2, vorzugsweise aus Kunststoff bestehend, aufgehängt bzw. abgestützt ist.

Die Abwasserleitung 2 besteht aus einzelnen Leitungsteilen, welche mittels Elektromuffen 3 miteinander wasserdicht verschweisst sind. Die Abwasserleitung 2 ist auf einem Träger 4 abgestützt, welcher Träger irgend einen Querschnitt, sei dies rund, quadratisch viereckig oder eine andere Profilform aufweisen kann. Er dient der Halterung der Abwasserleitung 2 und schützt diese vor Durchbiegung. Die Abwasserleitung 2 ist in einer Rohrschelle 6 gehaltert und gegebenenfalls mit einer Isolation 9 versehen. Zwischen den Rohrschellen 6 sind Führungsstützen 8 angeordnet, so dass die freie Stützweite zwischen je zwei Rohrschellen 6 bei der Rohrlänge von 6 m zwischen zwei sich folgenden Elektromuffen 3, wie Fig. 1 zeigt, z.B. 3 m beträgt und zwischen einer Führungsstütze 8 und der folgenden Rohrschelle 6 1,50 m.

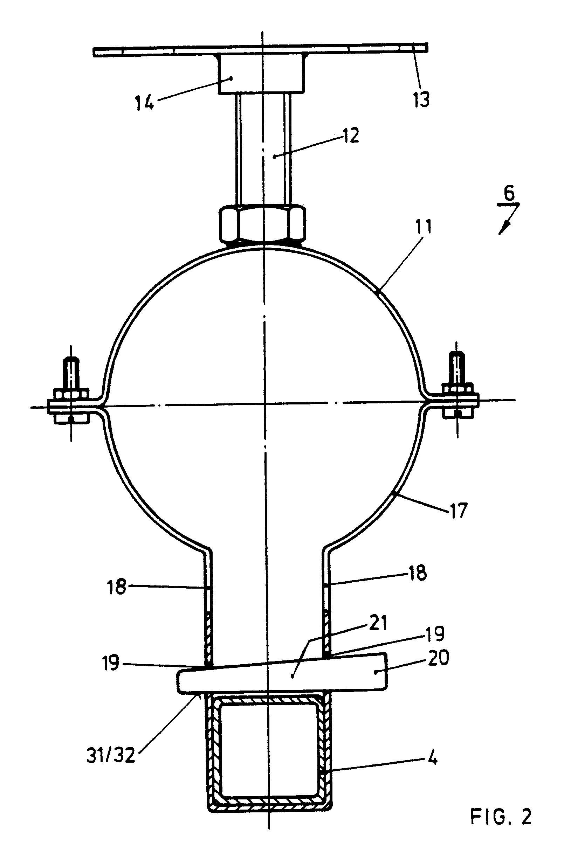

Die in Fig. 2 dargestellte Rohrschelle 6 weist einen Oberteil 11 mit einem Gewindezapfen 12, einer Deckenplatte 13 und einer Gewindemuffe 14 auf. Die Deckenplatte ist mit Schlitzen versehen, um sie an der Decke lagegerecht montieren zu können. Der Unterteil 17 der Rohrschelle 6 ist zusätzlich mit einem, hier U-förmig ausgebildeten, Führungselement 18 versehen, dessen zwei Schenkel je eine Oeffnung 19 aufweisen. Diese dienen der Aufnahme eines Keils 20. Dieser Keil 20 ist in Fig. 5 dargestellt. Er ist sowohl in seiner Höhe als auch in seiner Breite konisch. Daher sind seine dachförmigen Querschnitte geometrisch ähnlich. Seine seitlichen Auflageflächen 21 ergeben mit zwei unteren Kanten 31 und 32, welche zusammenlaufen, den Sperreffekt. Die Konizitäten sichern die Selbstsperrung. Der Keil ist durch eine Stanzung und eine Biegung billigst herstellbar.

Es ist aber auch möglich, zum Sperren des Keils eine Sperrfläche, vorzugsweise aufgerauht, beispielsweise mit einer Zahnung zu versehen, welche ein selbsttätiges Lösen des Keils, beispielsweise durch Erschütterungen, verhütet.

Eine weitere Möglichkeit der Ausbildung einer derartigen Verbindungsvorrichtung zeigen die Fig. 3 und 4, gemäss welchen zwei Trägerrohre 4 miteinander durch eine Verbindungsmuffe 25 verbunden werden. Der untere Teil der Verbindungsmuffe 25 ist als Schelle 26 ausgebildet, den entsprechenden Abmessungen der Trägerrohre 4 angepasst, die hier einen runden Querschnitt aufweisen. Die Schelle 26 ist mit einem darüberliegenden Bügel 27 mit vier Oeffnungspaaren 28 zur Aufnahme von vier Keilen 20 versehen. Diese muffenförmige Verbindungsvorrichtung dient der Verbindung zweier Rohre.

Die Führungsstützen 8 sind analog ausgebildet, wie die Rohrschellen 6. Sie stützen sich indessen nur auf dem Träger 4 ab, ohne mit der Decke 1 in Hängeverbindung zu stehen.

Die Montage der Abwasserleitung 2 erfolgt äusserst einfach, da ein Verschieben von Rohrschellen und Stützen auf dem Träger einfach zu bewerkstelligen ist und die Fixierung mittels Keilen 20 mühelos und sicher eine feste und trotzdem lösbare Verbindung darstellt. Auf diese Weise ist es u.a. möglich, Abwasserleitungen aus Kunststoff, ohne schädliche Deformationsmöglichkeiten, starr zu montieren.

In der Praxis wird häufig die Lage von Rohrschelle 6 und Träger 4 vertauscht, d.h. gemäss Fig. 2 ist der Träger 4 oben und die Rohrschelle 6 wird unter dem Träger angeordnet.

## Ansprüche

1. Anlage mit mindestens einer zur Medienführung vorgesehenen freiliegenden, an einer Decke oder einer Seitenwand aufgehängten Rohrleitung (2), insbesondere aus Kunststoff bestehenden Abwasserleitung (2), welche mittels Haltern (6, 18) mit diesen Bautenteilen (1) lösbar verbunden ist und bei welcher mindestens ein zusätzliches Tragelement (4) längs der Rohrleitung (2) angeordnet ist, dadurch gekennzeichnet, dass das ausschliesslich als Träger der Rohrleitung (2) dienende Tragelement (4) zwecks Erhöhung der Biegesteifigkeit der Rohrleitung (2) mit den Haltern (6, 18) sowie mit weiteren, nur das Tragelement (4) und die Rohrleitung (2) verbindenden Haltern über in je mindestens zwei sich gegenüberliegende Oeffnungen (19) in den Haltern (6, 8, 18) eingetriebene Keile (20) lösbar verbunden ist.

2. Anlage nach Anspruch 1, dadurch gekennzeichnet, dass die Rohrleitung (2) auf dem Tragelement (4) abgestützt oder an diesem aufgehängt ist, um insbesondere die durch die Gewichte verursachten, auf die Rohrleitung (2) wirkenden Kräfte aufzunehmen.

3. Halter zum Halten von Rohrleitungen (2) und Tragelementen (4) in Anlagen nach einem der Ansprüche 1 oder 2, dadurch gekennzeichnet, dass er zur Aufnahme der Rohrleitung (2) und des Tragelementes (4) ausgebildet ist, mindestens einen Durchgang sowie eine Rohrschelle (6) aufweist und einen Durchgangsteil (18) zur Aufnahme des Tragelementes (4) und dass er ferner mit mindestens zwei sich gegenüberliegenden Oeffnungen (19; 28) und mindestens einem Keil (20) versehen und zum teilweisen Umfassen mindestens eines mit ihm zu verbindenden Tragelementes (4, 4) vorgesehen ist und dass der Keil (20) zum Einschieben in zwei der sich gegenüberliegenden Oeffnungen (19; 28) und damit zum lösbaren Verbinden des Tragelementes (4, 25) und des Halters (26) dient.

4. Halter nach Anspruch 3, dadurch gekennzeichnet, dass der Durchgangsteil (18) zur Aufnahme des Tragelementes (4) unterhalb der Rohrschelle (6) liegt, wobei gegenbenenfalls zwischen dem Rohr und dem Tragelement ein Zwischenraum frei bleibt.

5. Halter nach Anspruch 3 oder 4, dadurch gekennzeichnet, dass das Tragelement (4) als Rohr oder Profil ausgebildet ist.

6. Halter nach einem der Ansprüche 3 bis 5, gekennzeichnet durch einen selbstsperrenden doppelkonischen Keil (20), gegebenenfalls mit linienförmiger Auflage (31, 32).

7. Halter nach einem der Ansprüche 3 bis 6, dadurch gekennzeichnet, dass er mit einer Deckenplatte (13) versehen ist.

## Claims

1. Installation with at least one duct (2) foreseen for fluid transportation and freely suspended to a ceiling or a side wall and, more specifically, a waste water duct (2) made of plastic material and removably assembled to these building elements (1) by means of fasteners (6, 18) and whereby at least one additional support element (4) is mounted along the duct (2), characterized by the fact that the support element (4) used exclusively to support the duct (2) is connected, in order to increase the bending stiffness of the duct (2) to fasteners (6, 18) as well as to other fasteners removably assembling only the support element (4) and the duct (2) by means of wedges (20) inserted into the fasteners (6, 8, 18) into at least two openings opposed to each other.

2. Installation according to claim 1, characterized by the fact that the duct (2) is supported by the support element (4) or is suspended to it, in order to withstand forces acting on the duct (2) and, more specifically, those caused by the weights.

3. Fastener for securing the ducts (2) and the support elements (4) in the installations according to one of the claims 1 or 2, characterized by the fact that this fastener is designed in order that it supports the duct (2) and the support element (4), has at least one passage as well as one clamp (6), is equipped with a passage part (18) to receive the support element (4), includes also at least two openings opposed to each other (19, 28) and at least one wedge (20) and is foreseen in order to partly surround at least one of the support elements (4,4) to be assembled together and that the wedge (20) must be inserted into two openings opposed to each other (19, 28) in order to removably assemble this way the support elements (4, 25) and the fasteners (26).

4. Fastener according to claim 3, characterized by the fact that the passage part (18), designed to receive the support element (4), is located under the clamp (6) while a gap remains possibly between the pipe and the support element.

5. Fastener according to claim 3 or 4, characterized by the fact that the support element (4) is made of a tube or a section.

6. Fastener according to one of claims 3 to 5, characterized by a self-locking wedge with double conicity (20), possibly with a linear contact surface (31, 32).

7. Fastener according to one of claims 3 to 6, characterized by the fact that it is equipped with a ceiling plate (13).

## Revendications

1. Installation avec au moins une conduite (2) prévue pour le transport de fluides et librement suspendue à un plafond ou à une paroi latérale et, en particulier, une conduite d'eau résiduaire (2) réalisée en matière plastique, qui est assemblée de manière amovible à ces éléments de construction (1) au moyen de fixations (6, 18) et dans laquelle au moins un élément de support supplémentaire (4) est disposé le long de la conduite (2), caractérisée en ce que l'élément de support (4) servant exclusivement de support de la conduite (2) est assemblé pour augmenter la rigidité à la flexion de la conduite (2) à des fixations (6, 18) ainsi qu'à d'autres fixations assemblant seulement l'élément du support (4) et la conduite (2) de manière amovible grâce à des coins (20) insérés dans les fixations (6, 8, 18) dans au moins deux orifices opposés l'un à l'autre.

2. Installation selon la revendication 1, caractérisée en ce que la conduite (2) est supportée par l'élément de support(4) ou est suspendue à celui-ci pour reprendre les forces agissant sur. la conduite (2) et, en particulier, celles provoquées par les poids.

3. Fixation pour fixer les conduites (2) et les éléments de support (4) dans les installations selon l'une des revendications 1 ou 2, caractérisée en ce que cette fixation est disposée de façon à recevoir la conduite (2) et l'élément de support (4), présente au moins un passage ainsi qu'un collier d'attache (6) et est pourvue d'une pièce de passage (18) pour recevoir l'élément de support (4) et comporte en outre au moins deux orifices opposés l'un à l'autre (19, 28) et au moins un coin (20) et est prévue pour entourer partiellement au moins l'un des éléments de support (4, 4) à assembler et que le coin (20) sert à être inséré dans deux orifices opposés l'un à l'autre (19, 28) et à assembler ainsi de manière amovible l'élément de support (4, 25) et la fixation (26).

4. Fixation selon la revendication 3, caractérisée en ce que la pièce de passage (18) destinée à recevoir l'élément de support (4) est située en dessous du collier d'attache (6) tandis qu'un intervalle reste éventuellement libre entre le tube et l'élément de support.

5. Fixation selon la revendication 3 ou 4, caractérisée en ce que l'élément de support (4) est constitué d'un tube ou d'un profilé.

6. Fixation selon l'une des revendications 3 à 5, caractérisée par un coin autoblocant à double conicité (20), éventuellement avec surface d'appui linéaire (31, 32).

7. Fixation selon l'une des revendications 3 à 6, caractérisée en ce qu'elle est pourvue d'une plaque de plafond (13).

FIG. 1

FIG. 3

FIG. 4

FIG. 5

FIG. 2